(19) Europäisches Patentamt
European Patent Office
Office européen des brevets

(11) EP 1 079 265 A2

(12) **EUROPEAN PATENT APPLICATION**

(43) Date of publication:
**28.02.2001 Bulletin 2001/09**

(51) Int Cl.$^7$: **G02F 1/141**

(21) Application number: **00307279.0**

(22) Date of filing: **23.08.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **27.08.1999 JP 24073099**
**27.08.1999 JP 24073199**
**21.08.2000 JP 2000250005**

(71) Applicant: **CANON KABUSHIKI KAISHA**
**Tokyo (JP)**

(72) Inventors:
- **Asao, Yasufumi, c/o Canon Kabushiki Kaisha Tokyo (JP)**
- **Togano, Takeshi, c/o Canon Kabushiki Kaisha Ohta-ku, Tokyo (JP)**

(74) Representative:
**Beresford, Keith Denis Lewis et al**
**BERESFORD & Co.**
**High Holborn**
**2-5 Warwick Court**
**London WC1R 5DJ (GB)**

(54) **Liquid crystal device**

(57) A liquid crystal device is constituted by a pair of substrates each having thereon an electrode, and a liquid crystal disposed between the substrates so as to be supplied with a voltage applied between the electrodes. The pair of substrates are provided with uniaxial aligning axes which are parallel but opposite to each other. The liquid crystal is a chiral smectic liquid crystal having a phase transition series of isotropic phase, cholesteric phase and chiral smectic C phase or a phase transition series of isotropic phase and chiral smectic C phase, respectively, on temperature decrease, and is placed in a monostable state under no voltage application and is placed in an alignment state exhibiting a pretilt angle of at least 4 degrees at a boundary thereof with at least one of the substrates.

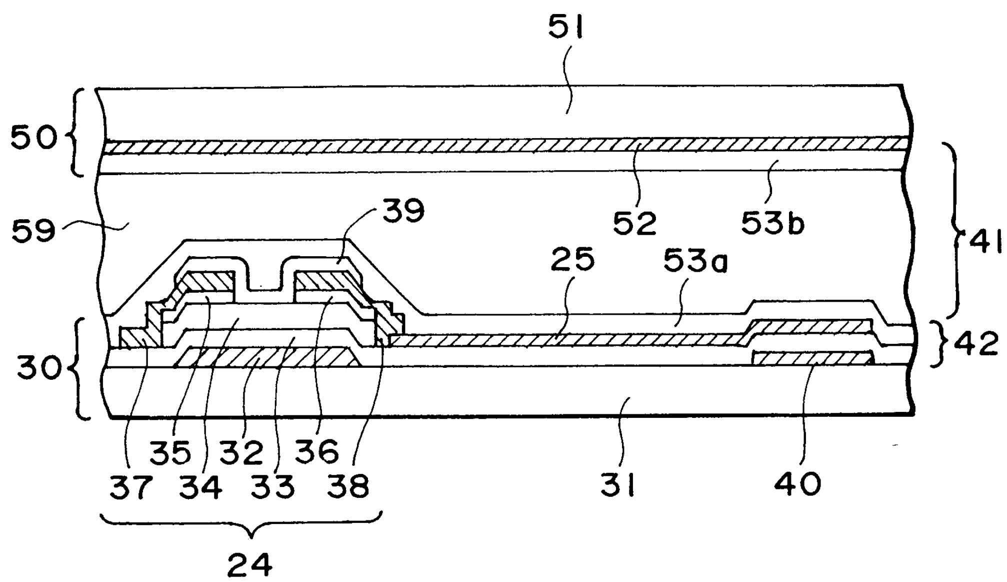


FIG. 5



Printed by Jouve, 75001 PARIS (FR)

## Description

FIELD OF THE INVENTION AND RELATED ART

The present invention relates to a liquid crystal device for use in light-valves for flat-panel displays, projection displays, printers, etc.

As a type of a nematic liquid crystal display device used heretofore, there has been known an active matrix-type liquid crystal device wherein each pixel is provided with an active element (e.g., a thin film transistor (TFT)).

As a nematic liquid crystal material used for such an active matrix-type liquid crystal device using a TFT, there has been presently widely used a twisted nematic (TN) liquid crystal as disclosed by M. Schadt and W. Helfrich, "Applied Physics Letters", Vol. 18, No. 4 (February 17, 1971), pp. 127 - 128.

In recent years, there has been proposed a liquid crystal device of In-Plain Switching mode utilizing an electric field applied in a longitudinal direction of the device or of Vertical Alignment mode, thus improving a viewing angle characteristic being poor in the conventional liquid crystal displays.

Accordingly, there are various liquid crystal modes suitable for the TFT-type liquid crystal device using the nematic liquid crystal material. In any mode however, the resultant nematic liquid crystal display device has encountered a problem of a slow response speed of several ten milliseconds or above.

In order to improve the response characteristic of the conventional types of nematic liquid crystal devices, several liquid crystal devices using a specific chiral smectic liquid crystal, such as a ferroelectric liquid crystal of a short pitch-type, a polymer-stabilized ferroelectric liquid crystal or an anti-ferroelectric liquid crystal showing no threshold (voltage) value have been proposed. Although, these devices have not been put into practical use sufficiently, it has been reported that a high-speed responsiveness on the order of below millisecond is realized. Further, chiral smectic liquid crystal devices have also been proposed in, e.g., U.S. Patents Nos. 4,900,132 (corr. to Japanese Patent No. 2607380) and 4,997,264 (corr. to W087/06020, Japanese Patents Nos. 2568236 and 2562569 and Japanese Laid-Open Patent Application (JP-A) No. 7-209676) and JP-A 6-186566. In these documents, however, chiral smectic liquid crystals used assume bistable states (for displaying two (black and white) display levels), thus being not suitable for a gradation display. As a chiral smectic liquid crystal device for a gradation display utilizing a monostabilized cell, there has been known JP-A 11-125843, wherein chiral smectic liquid crystal molecules are monostabilized from their bistable states in a specific low-temperature region in chiral smectic C phase due to a specific temperature-dependence of layer spacing. However, such a monostabilized cell is not practically usable in a temperature range substantially including the entire chiral smectic C phase temperatures.

With respect to the chiral smectic liquid crystal device, our research group has proposed a liquid crystal device as in U.S. Patent Application Serial No. 09/338426 (filed June 23, 1999) wherein a chiral smectic liquid crystal has a phase transition series on temperature decrease of isotropic liquid phase (Iso) - cholesteric phase (Ch) - chiral smectic C phase (SmC*) or Iso - SmC* and liquid crystal molecules are monostabilized at a position inside an edge of a virtual cone. During the phase transition of Ch - SmC* or Iso - SmC*, liquid crystal molecular layers are uniformly oriented or aligned in one direction, e.g., by applying a DC voltage of one polarity (+ or -) between a pair of substrates to improve high-speed responsiveness and gradation control performance and realize a high-luminance liquid crystal device excellent in motion picture image qualities with a high mass-productivity. The liquid crystal device of this type may advantageously be used in combination with active elements such as a TFT because the liquid crystal material used has a relatively small spontaneous polarization compared with those used in the conventional chiral smectic liquid crystal devices.

As described above, in a sense of solving the problem of the conventional nematic liquid crystal devices, i.e., improvement in response speed, the realization of a practical liquid crystal device using a chiral smectic liquid crystal, particularly a monostabilized liquid crystal device as proposed by our research group, is expected for used in advanced displays with high-speed responsiveness and good gradation display performance in combination.

In the above-mentioned monostabilized liquid crystal device, in order to place liquid crystal molecules in C2 alignment state in a chevron structure, a parallel rubbing cell structure wherein uniaxial alignment axis directions (rubbing directions) of a pair of substrates are parallel to each other and directed in the same direction is employed. However, according to our experiment, the C2 alignment state is difficult to be formed over the entire liquid crystal panel (cell), thus resulting in an occurrence of a portion of C1 alignment state in almost all the cases. As a result, it has been found that a zig-zag texture (region) is observed when viewed from a direction perpendicular to the panel surface. In the monostabilized liquid crystal device, a low pretilt alignment film may preferably be used in order to alleviate a difference in characteristics between C2 and C1 alignment regions. In this case, however, it is difficult to obviate the presence of characteristic difference between C2 and C1 alignment regions unless the pretilt angle is controlled to be completely zero. As a result, an irregularity in voltage-transmittance (V-T) characteristic within a display panel surface region is liable to occur.

In order to prevent such an occurrence of V-T characteristic irregularity, the above-mentioned low pretilt alignment film (e.g., pretilt angle = ca. 3 degrees) is used in combination with an anti-parallel rubbing cell wherein uniaxial alignment axis directions of a pair of substrates are parallel to each other but directed opposite to each other. When the anti-parallel rubbing cell is provided with a prescribed alignment control force, a stripe texture is observed and an oblique bookshelf structure (wherein liquid crystal molecular layers are inclined at a prescribed angle with respect to a direction perpendicular to the substrates) is formed. In the case where such a stripe texture is formed, the above-mentioned irregularity in V-T characteristic due to the difference in characteristics between the C2 and C1 alignments is not caused to occur, thus readily providing a uniform switching characteristic over the entire panel.

According to our further study on he above alignment state including the stripe texture, a loop-shaped region 2 (represented by a somewhat thick line) has been frequently observed in a stripe texture region 1 as shown in Figure 1. This loop-shaped region is utterly different from the zig-zag region (wherein a hairpin region and a lightning region form a loop) as in the above-mentioned parallel rubbing cell. Thus, the loop-shaped region is presumably considered to be a region intrinsic to the oblique bookshelf structure. The loop-shaped region (2 in Figure 1) provide an extinct portion (giving a darkest state) substantially identical to that of the stripe texture region (1 in Figure 1) surrounding the loop-shaped region, thus not increasing a black display level and being of no problem in terms of contrast. However, in the loop-shaped region, a slope of a V-T curve when a liquid crystal is supplied with a voltage for inversion is largely different from that in other (stripe texture) portions, thus leading to a deterioration in image quality in a halftone state (intermediate display state).

Further, in the case of using the low pretilt alignment film in a normally black mode, a light leakage is somewhat caused to occur even in a black display state (under no voltage application). As a result, it is assumed that a contrast is not essentially increased, so that a resultant liquid crystal device exhibits a contrast of ca. 140 at the best, which is somewhat lower than that of a commercially available TFT-type liquid crystal device.

As described above, in the parallel rubbing cell assuming C1 and C2 alignment states, it is difficult to obviate the occurrence of irregularity in V-T characteristic within a (display) panel region. Further in the anti-parallel rubbing cell, such a V-T characteristic irregularity is not observed but it is essentially difficult to realize a sufficiently high contrast.

## SUMMARY OF THE INVENTION

Embodiments of the present invention provide a liquid crystal device which alleviate the above-mentioned problems.

One embodiment of the present invention provides a liquid crystal device capable of preventing an occurrence of a loop-shaped region in such an alignment state that liquid crystal molecules are monostabilized and assume stripe textures.

One embodiment of the present invention provides a monostabilized liquid crystal device capable of suppressing an occurrence of irregularity in V-T characteristic within a display panel area to provide a uniform inversion behavior and improved contrast.

According to the present invention, there is provided a liquid crystal device, comprising:

a pair of substrates each having thereon an electrode, and
a liquid crystal disposed between the substrates so as to be supplied with a voltage applied between the electrodes, wherein
the pair of substrates are provided with uniaxial aligning axes which are parallel but opposite to each other,
the liquid crystal is a chiral smectic liquid crystal having a phase transition series of isotropic phase, cholesteric phase and chiral smectic C phase or a phase transition series of isotropic phase and chiral smectic C phase, respectively, on temperature decrease, and
the liquid crystal is placed in a monostable state under no voltage application and is placed in an alignment state exhibiting a pretilt angle of at least 4 degrees at a boundary thereof with at least one of the substrates.

In the liquid crystal device, the liquid crystal may preferably have an alignment characteristic such that the liquid crystal is aligned to provide an average molecular axis to be placed in a monostable alignment state under no voltage application, is tilted from the monostable alignment state in one direction when supplied with a voltage of a first polarity at a tilting angle which varies depending on magnitude of the supplied voltage, and is tilted from the monostable alignment state in the other direction when supplied with a voltage of a second polarity opposite to the first polarity at a tilting angle, said tilting angles providing maximum tilting angles $\beta 1$ and $\beta 2$ formed under application of the voltages of the first and second polarities, respectively, satisfying $\beta 1 > \beta 2$, preferably $\beta 1 \geq 5 \times \beta 2$.

These and other objects, features and advantages of the present invention will become more apparent upon a consideration of the following description of the preferred embodiments of the present invention taken in conjunction with the accompanying drawings.

## BRIEF DESCRIPTION OF THE DRAWINGS

Figure 1 is a schematic view for illustrating a loop-shaped region in a conventional liquid crystal device.
Figure 2 is a schematic view for illustrating a loop-shaped region and an oblique bookshelf structure in a conventional liquid crystal device.
Figure 3 is a schematic sectional view of an embodiment of the liquid crystal device according to the present invention.
Figure 4 is a schematic plan view of an active matrix substrate of the liquid crystal device of the present invention connected with drive circuits.
Figure 5 is a schematic sectional view of one-pixel portion of the liquid crystal device shown in Figure 4.
Figure 6 is an equivalent circuit of the one-pixel portion shown in Figure 5.
Figure 7 is a time chart of driving waveforms for the liquid crystal device shown in Figures 4 - 6.

## DESCRIPTION OF THE PREFERRED EMBODIMENTS

In a liquid crystal device of an embodiment of the invention, when a liquid crystal has a phase transition series of, on temperature decrease, isotropic (liquid) phase (Iso), cholesteric phase (Ch) and chiral smectic C phase (SmC*) or Iso and SmC*, i.e., not including smectic A phase (SmA) between Iso and SmC*, a pretilt angle $\alpha$ is set in an appropriate range, specifically at least 4 degrees, with respect to at least one, preferably both, of a pair of substrates, thus effectively suppressing an occurrence of the above-mentioned loop-shaped region as in the anti-parallel rubbing cell (e.g., $\alpha$ = ca. 3 degrees).
In the liquid crystal device, the pair of substrates sandwiching the liquid crystal have opposite surfaces subjected to a uniaxial alignment treatment (e.g., rubbing) so that their uniaxial alignment axes are parallel to each other but oppositely directed (i.e., anti-parallel relationship), thus obviating an occurrence of an irregularity in V-T characteristic within a display panel are and providing a high contrast.
The pretilt angle $\alpha$ may preferably be in a range of at least 4 degrees to below 50 degrees. If the pretilt angle a is at least 50 degrees, liquid crystal molecules in the resultant liquid crystal device is liable to be aligned perpendicular to the substrates (vertical or homeotropic alignment).
In the case wherein a pretilt angle $\alpha$ at a boundary of the liquid crystal with a substrate is in a range of at least 4 degrees to below (10 degrees ($4 \leqq \alpha < 10$), when a display or optical modulation region of the liquid crystal device is viewed in a direction perpendicular thereto, the loop-shaped region is little observed. Accordingly, the resultant liquid crystal device may suitably be used in a liquid crystal display apparatus of a direct view-type exhibiting a good halftone display characteristic free from the V-T characteristic irregularity and a good viewing angle characteristic.
In the case where the pretilt angle $\alpha$ is at least 10 degrees, compared with the case of $4 \leqq \alpha < 10$ (degrees), the resultant liquid crystal device provides a better uniform alignment state over the entire display area and thus may particularly suitably be used in a liquid crystal apparatus using an enlarged optical system (e.g., of a projection display-type).
In the case where the pretilt angle $\alpha$ is in a range of $20 \leqq \alpha < 35$ (degrees), a degree of an occurrence of a domain including the loop-shaped region is further minimized when compared with the case of $10 \leqq \alpha < 20$.
Further, when compared with the case of $35 \leqq \alpha < 50$, the liquid crystal device providing the pretilt angle satisfying $20 \leqq \alpha < 35$ provides a better yield at the time of mass production thereof because of a decreased degree of occurrence of homeotropic alignment state of liquid crystal molecules in products. The pretilt angle may preferably be set in a range of $20 \leqq \alpha < 35$.
The pretilt angle $\alpha$ referred to herein is a pretilt angle measured at a lower-limit temperature of Ch (cholesteric phase) when a liquid crystal material used shows Ch or a pretilt angle measured at an upper-limit temperature of SmC* because it is particularly important that a pretilt angle value affecting a layer inclination angle at the time of first formation of layer structure of liquid crystal molecules on temperature decrease is taken into consideration.
At the above measuring temperature, in the case where it is difficult to measure the pretilt angle or the pretilt angle shown no or substantially no temperature dependence, it may be possible to measure the pretilt angle at another arbitrary temperature. Alternatively, it is possible to employ a pretilt angle measured in Ch or SmC* of a liquid crystal composition comprising similar components to the liquid crystal used in embodiments of the invention, in place of the above-mentioned pretilt angle.
The measurement of the pretilt angle a may be performed according to the crystal rotation method as described at Jpn. J. Appl. Phys. vol. 19 (1980), No. 10, Short Notes 2013.
For measurement, an anti-parallel rubbing liquid crystal cell provided with alignment treatment (rubbing) axes directed parallel but opposite to each other (so that liquid crystal molecules are tilted to form molecular layers in parallel with each other and tilted in the same direction at boundaries of a pair of substrates) was rotated in a plane perpendicular to the pair of substrates and including the aligning treatment axes (rubbing axes) and, during the rotation, the cell was

illuminated with a helium-neon laser beam having a polarization plane forming an angle of 45 degrees with respect to the rotation plane in a direction normal to the rotation plane, whereby the intensity of the transmitted light was measured by a photodiode from the opposite side through a polarizer having a transmission axis parallel to the incident polarization plane.

A pretilt angle $\alpha$ was obtained through a simulation wherein a fitting of a spectrum of the intensity of the transmitted light formed by interference was effected with respect to the following theoretical curve (a) and relationship (b):

$$T(\phi) = \cos^2\left[ \frac{\pi d}{\lambda} \left( \frac{NeNo\sqrt{N^2(\alpha) - \sin^2\phi}}{N^2(\alpha)} - \sqrt{No^2 - \sin^2\phi} - \frac{Ne^2-No^2}{N^2(\alpha)} \sin\alpha\cdot\cos\alpha\cdot\sin\phi \right)\right] \quad (a),$$

and

$$N(\alpha) \equiv \sqrt{No^2\cdot\cos^2\alpha + Ne^2\cdot\sin^2\alpha} \quad (b),$$

wherein No denotes the refractive index of ordinary ray, Ne denotes the refractive index of extraordinary ray, $\phi$ denotes the rotation angle of the cell, $T(\phi)$ denotes the intensity of the transmitted light, d denotes the cell thickness, and $\lambda$ denotes the wavelength of the incident light.

Hereinbelow, the loop-shaped region observed in the above-mentioned conventional anti-parallel rubbing cell providing a smaller pretilt angle a (e.g., below 4 degrees) will be specifically described.

We have assumed that an occurrence of the loop-shaped region in the conventional anti-parallel rubbing cell ($\alpha$ < 4 degrees) is attributable to an oblique bookshelf structure having different layer inclination directions s shown in Figure 2 wherein smectic (molecular) layers of two types 3A and 3B are formed between a pair of substrates 4 to cause a loop-shaped region 2 observed from a direction perpendicular to the substrate surface (or a display panel region).

More specifically, liquid crystal molecules are assumed that they form a (vertical) bookshelf structure immediately after a phase transition to a smectic phase (i.e., formation of layers). Thereafter, a layer spacing is gradually decreased on temperature decrease to cause a change of the bookshelf structure toward such a structure that smectic layers are inclined or tilted from a direction normal to the substrate.

At that time, when a chevron layer structure is formed, the liquid crystal molecules are aligned in C1 or C2 alignment state.

Further, when a liquid crystal device exhibiting a low pretilt angle (e.g., $\alpha$ < 4 degrees) and a Ch-SmC* phase transition is designed to provide an appropriate alignment control force, liquid crystal molecules form stripe textures and an oblique bookshelf structure. In this case, presumably, a (vertical) bookshelf structure is formed immediately after the Ch-SmC* phase transition and then a layer spacing is gradually decreased on temperature decrease to change the tilted structure from the substrate normal direction due to a prescribed alignment control force, thus resulting in an oblique bookshelf structure, not the chevron structure. We assume that a minute ununiformity (irregularity) in layer structure during the charge of layer inclination angle with respect to the substrates is observed as stripe textures.

In that case, when the pretilt angle is set to be smaller ($\alpha$ < 4 degrees), the layer structure is changed from the (vertical) bookshelf structure to an oblique bookshelf structure including a first layer structure (3A in Figure 2) tilted clockwise from the substrate normal direction and a second layer structure (3B in Figure 2) tilted counterclockwise from the substrate normal direction in the substantially same proportion as shown in Figure 2. As a result, we consider that the loop-shaped region is a region resulting from the irregularity in layer structure (i.e., the co-presence of the different smectic layers 3A and 3B).

On the other hand, the liquid crystal device of embodiments of the invention designed to provide a relatively high pretilt angle $\alpha$ of at least 4 degrees and an anti-parallel rubbing cell structure, different from the above-mentioned conventional low-pretilt liquid crystal device ($\alpha$ < 4 degrees), readily provides an oblique bookshelf structure which has already been formed from immediately after the phase transition to the (chiral) smectic phase (formation of layer structure). In addition, the oblique bookshelf structure includes a uniform layer structure tilted only in one direction from an initial stage of the phase transition (to SmC*), thus effectively preventing an occurrence of the loop-shaped region (resulting from the different layer structures in the oblique bookshelf structure) to realize uniform alignment state which no image defects.

As described hereinabove, in the conventional liquid crystal device, the loop-shaped region is frequently observed within the stripe textures to lead to a deterioration in image quality in a halftone (intermediate) image state.

In the liquid crystal device of embodiments of the invention, based on a combination of at least one substrate providing a relatively high pretilt angle of at least 4 degrees with uniaxial alignment axes of a pair of substrates directed parallel but opposite to each other, it becomes possible to prevent an occurrence of the loop-shaped region causing the V-T characteristic irregularity.

In embodiments of the invention, when the liquid crystal device is used as a direct view-type liquid crystal device, the pretilt angle a may preferably be not a larger value, specifically below 10 degrees ($4 \leqq \alpha < 10$) in order to ensure a good viewing angle characteristic.

In another aspect, in the liquid crystal device of embodiments of the invention designed to provide a pretilt angle of at least 10 degrees, the uniform oblique bookshelf structure is advantageously formed from an initial stage of the phase transition (to SmC*), thus not readily causing an occurrence in ununiformity or irregularity in layer structure as observed in the oblique bookshelf structure (Figure 2) of the conventional low-pretilt liquid crystal device ($\alpha < 4$ degrees). As a result, in the anti-parallel rubbing liquid crystal device of embodiments of the invention ($\alpha \geqq 10$ degrees), an occurrence of the stripe textures including the loop-shaped region can effectively be prevented. In addition, the liquid crystal device is free from the V-T characteristic irregularity within its panel area while improving a contrast, thus being suitably used in a liquid crystal display apparatus providing excellent display characteristics.

In the liquid crystal device of embodiments of the invention, an alignment characteristic of a liquid crystal used in remarkably improved based on a combination of the above-mentioned specific pretilt condition ($\alpha \geqq 4$ degrees) for at least one of a pair of substrates an the anti-parallel relationship of uniaxial alignment axes provided to the pair of substrates. In this regard, liquid crystal molecules are placed in a stable position substantially aligned with the rubbing (uniaxial alignment axis) directions.

In the liquid crystal device of embodiments of the invention, the liquid crystal used comprises a chiral smectic liquid crystal having a phase transition series on temperature decrease of Iso - Ch - SmC* or Iso - SmC*. When one-polarity (positive (+) or negative (-)) DC voltage is applied between the pair of substrates during the phase transition to SmC*, as desired, liquid crystal molecules in SmC* are placed in a state providing only either one of two layer formation directions giving different layer normal directions to provide a certain angle formed between an average uniaxial aligning axis and the resultant smectic layer normal direction. Further, under no voltage application, liquid crystal molecules are stabilized inside a virtual cone edge for the liquid crystal molecules, thus being placed in a SmC* alignment state wherein a memory characteristic is not developed (i.e., a non-memory state), i.e., in a monostabilized state under no voltage application.

The liquid crystal showing chiral smectic phase may preferably have a helical pitch which is at least twice a cell gap in a bulk state thereof.

The chiral smectic liquid crystal may preferably be a liquid crystal composition prepared by appropriately blending a plurality of liquid crystal materials selected from hydrocarbon-type liquid crystal materials containing a biphenyl, phenylcyclohexane ester or phenyl-pyrimidine skeleton; naphthalene-type liquid crystal materials; and fluorine-containing liquid crystal materials.

The liquid crystal composition as the chiral smectic liquid crystal used in the liquid crystal device may preferably comprise at least two compounds each represented by the following formulas (1), (2), (3) and (4).

Formula 1

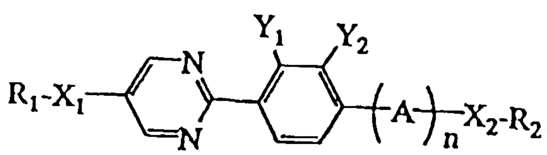

wherein A is

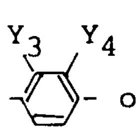 or 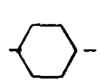 ;

R1 and R2 are independently a linear or branched alkyl group having 1 - 20 carbon atoms optionally having a substituent; X1 and X2 are independently a single bond O, COO or OOC; Y1, Y2, Y3 and Y4 are independently H or F; and n is 0 or 1.

Formula (2)

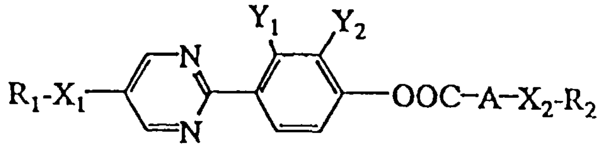

wherein A is

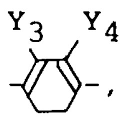, 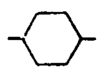 or 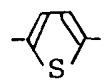;

R1 and R2 are independently a linear or branched alkyl group having 1 - 20 carbon atoms optionally having a substituent; X1 and X2 are independently a single bond O, COO or OOC; and Y1, Y2, Y3 and Y4 are independently H or F.

Formula (3)

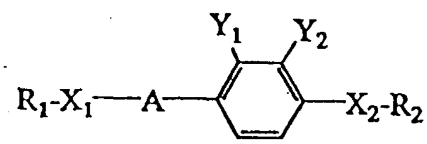

wherein A:

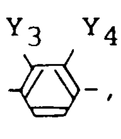, 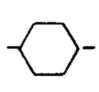, 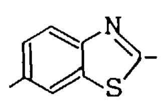, 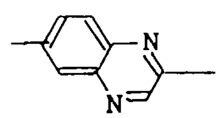

or

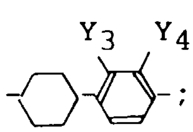;

R1 and R2 are independently a linear or branched alkyl group having 1 - 20 carbon atoms optionally having a substituent X1 and X2 are independently a single bond O, COO or OOC; and Y1, Y2; Y3 and Y4 are independently H or F.

Formula (4)

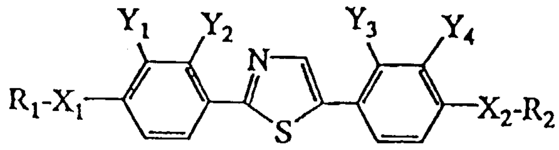

wherein R1 and R2 are independently a linear or branched alkyl group having 1 - 20 carbon atoms optionally having a substituent; X1 and X2 are independently a single bond, O, COO or OOC; and Y1, Y2, Y3 and Y4 are independently H or F.

Hereinbelow, an embodiment of the liquid crystal device according to the present invention will be described with reference to Figure 3.

Figure 3 shows a schematic sectional view of a liquid crystal device according to one embodiment of the present invention.

Referring to Figure 3, the liquid crystal device includes a pair of substrates 11a and 11b; electrodes 12a and 12b disposed on the substrates lla and 11b, respectively; insulating films 13a and 13b disposed on the electrodes 12a and 12b, respectively; alignment control films 14a and 14b disposed on the insulating films 13a and 13b, respectively; a chiral smectic liquid crystal 15 disposed between the alignment control films 14a and 14b; and a spacer 16 disposed together with the liquid crystal 15 between the alignment control films 14a and 14b.

Each of the substrates lla and llb comprises a transparent material, such as glass or plastics, and is coated with, e.g., a plurality of stripe electrodes 12a (12b) of $In_2O_3$ or ITO (indium tin oxide) for applying a voltage to the liquid crystal 15. These electrodes 12b and 12b are arranged in a matrix form. In a preferred embodiment, one of the substrates lla and 11b is provided with a matrix electrode structure wherein dot-shaped transparent electrodes are disposed as pixel electrodes in a matrix form and each of the pixel electrodes is connected to a switching or active element, such as a TFT (thin film transistor) or MIM (metal-insulator-metal), and the other substrate may be provided with a counter (common) electrode on its entire surface or in an prescribed pattern, thus constituting an active matrix-type liquid crystal device.

On the electrodes 12a and 12b, the insulating films 13a and 13b, e.g., of $SiO_2$, $TiO_2$ or $Ta_2O_5$ having a function of preventing an occurrence of short circuit may be disposed, respectively, as desired.

On the insulating films 13a and 13b, the alignment control films 14a and 14b are disposed so as to control the alignment state of the liquid crystal 15 contacting the alignment control films 14a and 14b. The alignment control films 14a and 14b are subjected to a uniaxial aligning treatment (e.g., rubbing). Such an alignment control film 14a (14b) may be prepared by forming a film of an organic material (such as polyimide, polyimideamide, polyamide or polyvinyl alcohol through wet coating with a solvent, followed by drying and rubbing in a prescribed direction or by forming a deposited film of an inorganic material through an oblique vapor deposition such that an oxide (e.g., SiO) or a nitride is vapor-deposited onto a substrate in an oblique direction with a prescribed angle to the substrate.

The alignment control films 14a and 14b may appropriately be controlled to provide liquid crystal molecules of the liquid crystal 15 with a prescribed pretilt angle a (an angle formed between the liquid crystal molecule and the alignment control film surface at the boundaries with the alignment control films) by changing the material and treating conditions (of the uniaxial aligning treatment).

In the case where both of the alignment control films 14a and 14b are subjected to the uniaxial aligning treatment (rubbing), the respective uniaxial aligning treatment (rubbing) directions may appropriately be set in an anti-parallel relationship. In the case of adopting a crossed relationship providing a crossing angle therebetween, the crossing angle may be set to be at most 45 degrees.

The substrates lla and llb are disposed opposite to each other via the spacer 16 comprising e.g., silica beads for determining a distance (i.e., cell gap) therebetween, preferably in the range of 0.3 - 10 µm, in order to provide a uniform uniaxial aligning performance and such an alignment state that an average molecular axis of the liquid crystal molecules under no electric field application is substantially aligned with an average uniaxial aligning treatment axis (a bisector of two uniaxial aligning treatment axes) although the cell gap varies its optimum range and its upper limit depending on the liquid crystal material used. The cell gap may preferably be appropriately set to provide a desired retardation.

In addition to the spacer 16, it is also possible to disperse adhesive particles of a resin (e.g., epoxy resin) (not shown) between the substrates 11a and 11b in order to improve adhesiveness therebetween and an impact (shock) resistance of the chiral smectic liquid crystal.

A liquid crystal device having the above-mentioned anti-parallel rubbing liquid crystal cell structure can be prepared by using a chiral smectic liquid crystal material 15 while adjusting the composition thereof, and further by appropriate adjustment of the liquid crystal material treatment, the device structure including a material, and a treatment condition for alignment control films 14a and 14b. As a result, in a preferred embodiment of the present invention, the liquid crystal material is placed in such an alignment state that liquid crystal molecules are stabilized in one (stable) state (monostable state) when no voltage is applied and under application of a voltage, the liquid crystal molecules are tilted from the monostable state to provide a transmittance varying continuously with no threshold depending on the magnitude of the applied voltage. A degree of monostabilization of liquid crystal molecules under no voltage application principally depends on magnitude of the alignment control force. In the present invention, by providing a relatively high pretilt angle ($\alpha \geqq 4$ degrees) at a boundary between an alignment control film and the liquid crystal molecules, the uniaxial alignment control force exerted on the monostabilized liquid crystal molecules is relatively weakened to allow easy molecular inversion under application of a relatively low voltage, thus realizing a low-voltage drive of the resultant liquid crystal device. More specifically, the liquid crystal material may preferably be placed in an alignment state such that the liquid crystal molecules are aligned to provide an average molecular axis to be monostabilized in the absence of an electric field applied thereto and, under application of voltages of one polarity (a first polarity), are tilted in one direction from the average molecular axis under no electric field to provide a tilting angle which varies continuously from the average molecular axis of the monostabilized position depending on the magnitude of the applied voltage. On the other hand, under application of voltages of the other polarity (i.e., a second polarity opposite to the first polarity), the liquid crystal molecules are tilted in the other direction from the average molecular axis under no electric field depending on the magnitude of the applied voltages, thus realizing a halftone (gradation) display. Further, in this embodiment a maximum tilting angle $\beta 1$ obtained under application of the first polarity voltages based on the monostabilized position is substantially larger than a maximum tilting angle $\beta 2$ formed under application of the second polarity voltages, i.e., $\beta 1 > \beta 2$, more preferably $\beta 1 \geqq 5 \times \beta 2$.

The liquid crystal device of embodiments of the invention may be used as a color liquid crystal device by providing one of the pair of substrates lla and llb with a color filter comprising color filter segments (color portions) of at least red (R), green (G) and blue (B). It is also possible to effect a full-color display successively switching a light source comprising R light source, G light source and B light source emitting color light fluxes to effect color mixing in a time sequential manner.

The liquid crystal device shown in Figure 3 is of a light-transmission type such that the pair of substrates 11a and 11b are sandwiched between a pair of polarizers (not shown) to optically modulate incident light (e.g., issued from an external light source) through one of the substrates to be passed through the other substrate. The liquid crystal device of embodimets of the invention may be modified into a reflection-type liquid crystal device by providing a reflection plate to either one of the substrates lla and 11b or using a combination of one of the substrates per se formed of a reflective material or with a reflecting member thereon and the other substrate provided with a polarizer outside thereof, thus optically modulating incident light and reflected light and causing the reflected light to pass through the substrate on the light incident side.

In embodiments of the invention, by using the above-mentioned liquid crystal device in combination with a drive circuit for supplying gradation signals to the liquid crystal device, it is possible to provide a liquid crystal display apparatus capable of effecting a gradational display based on the above-mentioned alignment characteristic such that under voltage application, a resultant tilting angle varies continuously from the monostabilized position of the average molecular axis (of liquid crystal molecules) and a corresponding emitting light quantity continuously changes, depending on the applied voltage. For example, it is possible to use, as one of the pair of substrates, an active matrix substrate provided with a plurality of switching elements (e.g., TFT (thin film transistor) or MIM (metal-insulator-metal)) in combination with a drive circuit (drive means), thus effecting an active matrix drive based on amplitude modulation to allow a gradational display in an analog gradation manner.

Hereinbelow, an embodiment of a liquid crystal display apparatus including a liquid crystal device of the present invention provided with such an active matrix substrate will be explained with reference to Figures 4 - 6.

Figure 4 shows a schematic plan view of such a display apparatus including a liquid crystal device and a drive circuit (means) and principally illustrates a structure on the active matrix substrate side.

Referring to Figure 4, a liquid crystal device (panel) 20 includes a structure such that scanning signal lines (gate lines) 26 (G1, G2, G3, G4, G5, ...) connected to a scanning signal driver 21 (drive means) and data signal lines (source lines) 23 (S1, S2, S3, S4, S5, ...) connected to a data signal driver 22 (drive means) are disposed to intersect each other at right angles in an electrically isolated state, thus forming a plurality of pixels (5x5 in Figure 4) each at intersection thereof. Each pixel is provided with a thin film transistor (TFT) 24 as a switching element and a pixel electrode 25. The scanning signal (gate) lines 26 (G1, G2, ...) are connected with gate electrodes (not shown) of the TFT 24, respectively, and the data signal (source) lines 23 (S1, S2, ...) are connected with source electrodes (not shown) of the TFT 24, respectively. The pixel electrodes 25 are connected with drain electrodes (not shown) of the TFT 24, respectively.

A gate voltage is supplied to the gate lines (G1, G2, ...) 26 from the scanning signal driver 21 by effecting scanning selection in, e.g., a line-sequential manner. In synchronism with this scanning selection on the gate lines 26, the source lines 23 (S1, S2, ...) are supplied with a data signal voltage depending on writing data for each pixel from the data signal driver 22. The thus-supplied gate and data signal voltages are applied to each pixel electrode 25 via the TFT 24.

Figure 5 shows a sectional structure of each pixel portion (corr. to 1 bit) in the panel structure shown in Figure 4.

Referring to Figure 5, a layer of a chiral smectic liquid crystal material 59 is sandwiched between an active matrix substrate or plate 30 provided with a TFT 24 and a pixel electrode 25 and an opposing substrate or plate 50 provided with a common electrode 52, thus providing a liquid crystal capacitor (Clc) 41 of the liquid crystal layer 59.

In this embodiment, the active matrix substrate 30 includes an amorphous silicon (a-Si) TFT as the TFT 24. The TFT may be of a polycrystalline-Si (p-Si) type.

The TFT 24 is formed on a substrate 31 of, e.g., glass and includes: a gate electrode 32 connected with the gate lines 26 (G1, G2, ... shown in Figure 4); an insulating film (gate insulating film) 33 of, e.g., silicon nitride (SiNx) formed on the gate electrode 32; an a-Si layer 34 formed on the insulating film 33; $n^+$ a-Si layers 35 and 36 formed on the a-Si layer 34 and spaced apart from each other; a source electrode 37 formed on the $n^+$ a-Si layer 35; a drain electrode 38 formed on the $n^+$ a-Si layer 36 and spaced apart from the source electrode 37; a channel protective film 39 partially covering the a-Si layer 34 and the source and drain electrodes 37 and 38. The source electrode 37 is connected with the source lines 23 (S1, S2, ... shown in Figure 4) and the drain electrode 38 is connected with the pixel electrode 25 (Figure 4) of a transparent conductor film (e.g., ITO film). The TFT 24 is placed in an "ON" state by applying a gate pulse to the gate electrode 32 during a scanning selection period of the corresponding gate line 26.

Further, on the active matrix substrate 30, a structure constituting a holding or storage capacitor (Cs) 42 is formed by the pixel electrode 25, a storage capacitor electrode 40 disposed on the substrate 31, and a portion of the insulating film 33 sandwiched therebetween. The structure (storage capacitor) (Cs) 42 is disposed in parallel with the liquid crystal capacitor 41. In the case where the storage capacitor electrode 40 has a large area, a resultant aperture or opening rate is decreased. In such a case, the storage capacitor electrode 40 is formed of a transparent conductor film (e.g., ITO film).

On the TFT 24 and the pixel electrode 25 of the active matrix substrate 30, an alignment film 53a for controlling an alignment state of the liquid crystal 59.

On the other hand, the opposing substrate 50 includes a substrate (e.g., glass substrate) 51; a common electrode 52 having a uniform thickness disposed on the entire substrate 51; and an alignment film 53b having a uniform thickness, disposed on the common electrode 52, for controlling an alignment state of the liquid crystal 59.

The above liquid crystal device shown in Figure 5 is sandwiched between a pair of cross-nicol polarizers (not shown) (provided with polarizing axes disposed perpendicular to each other) to constitute a light-transmission type liquid crystal device.

Next, an example of an ordinary active matrix driving method utilizing the liquid crystal device having the active matrix substrate (plate) and the above-mentioned cell structure will be described with reference to Figures 6 and 7 in combination with Figures 4 and 5.

Figure 6 shows an example of an equivalent circuit for each pixel portion of such a liquid crystal device shown in Figure 5.

In the active matrix driving method used in the embodiment of the invention described below, as shown in Figure 7, for each pixel, one frame period for displaying a prescribed information is divided into a plurality of field periods (e.g., IF and 2F in Figure 7) each for a prescribed image.

In each of the field periods IF and 2F, a prescribed transmitted light quantity depending on a prescribed image information for each field period is obtained. Further, in each frame period, an average of the transmitted light quantities in the field periods 1F and 2F is obtained to provide a prescribed image.

Hereinbelow, an active matrix driving method using a frame period divided into two field periods and a liquid crystal material 59 having an alignment characteristic such that liquid crystal molecules are aligned or oriented to provide a sufficient transmitted light quantities under application of one-polarity voltage and weaker transmitted light quantities under application of the other-polarity voltage (i.e., the case of the alignment state of the liquid crystal satisfying the above-mentioned relationship $\beta 1 > \beta 2$ in the respect to the maximum tilting angles) will be described.

Figure 7 shows at (a) a voltage waveform applied to one gate line 26 (e.g., G1 shown in Figure 4) (as a scanning signal line) connected with each pixel.

In the liquid crystal device driven by the active matrix driving method, the gate lines G1, G2, ... shown in Figure 4 are selected in a line-sequential manner in each of the field periods IF and 2F. At this time, each gate electrode 32 connected with a corresponding gate line is supplied with a prescribed gate voltage Vg in a selection period $T_{on}$ of each field period (e.g., 1F), thus placing the TFT 24 in an "ON" state. In a non-selection period Toff (of, e.g., the field period 1F) corresponding to a period in which other gate lines are selected, the gate electrode 32 is not supplied with the gate voltage Vg, thus placing the TFT 24 in an "OFF" state (high-resistance state). In every selection period $T_{on}$,

a prescribed and same gate line is selected and a corresponding gate electrode 32 is supplied with the gate voltage Vg.

Figure 7 shows at (b) a voltage waveform applied to one source line 23 (e.g., S1 shown in Figure 4) (as a data signal line) connected to the pixel concerned.

When the gate electrode 32 is supplied with the gate voltage Vg in the selection period $T_{on}$ of each field period 1F or 2F as shown at (a) of Figure 7, in synchronism with this voltage application, a prescribed source voltage (data signal voltage) Vs having a prescribed potential providing a writing data (pulse) to the pixel concerned is applied to a source electrode 37 through the source line connected with the pixel based on a potential Vc of a common electrode 52 as a reference potential.

More specifically, in the first field period 1F constituting one frame period, a positive-polarity source voltage Vs having a potential Vx (based on a reference potential Vc) providing a desired optical state or display data (transmittance) based on a voltage-transmittance (V-T) characteristic for the liquid crystal used is applied to the source electrode 37 concerned.

At this time, the TFT 24 is in an "ON" state, whereby the positive-polarity source voltage Vx applied to the source electrode 37 is supplied to a pixel electrode 25 via a drain electrode 38, thus charging a liquid crystal capacitor (Clc) 41 and a storage capacitor (Cs) 42. As a result, the potential of the pixel electrode 25 becomes a level equal to that of the positive-polarity source (data signal) voltage Vx.

Then, in a subsequent non-selection period $T_{off}$, for the gate line 26 on the pixel concerned, the TFT 24 is in an "OFF" (high-resistance) state. At this time (in $T_{off}$ of 1F), in the liquid crystal cell, the liquid crystal capacitor (Clc) 41 and the storage capacitor (Cs) 42 retain the electric charges therein, respectively, charged in the selection period $T_{on}$ to keep the (positive-polarity) voltage Vx. As a result, the liquid crystal layer 59 of the pixel concerned is supplied with the voltage Vx through the first field period 1F to provide thereat a desired optical state (transmitted light quantity) depending on the voltage Vx.

In the case where the response time of the liquid crystal is larger than the gate "ON" period, a switching of the liquid crystal is effected in the non-selection period Toff (the gate "OFF" period) after the completion of the charging of the liquid crystal capacitor (Clc) 41 and the storage capacitor (Cs) 42. In this case, the electrical charges stored in the capacitors are reduced due to inversion of spontaneous polarization 60 to provide (positive-polarity) voltage Vx' smaller than the voltage Vx by a voltage Vd as a pixel voltage Vpix applied to the liquid crystal layer 59 as shown at (c) of Figure 7.

Thereafter, in the second (subsequent) field period 2F, a negative-polarity source voltage Vs (= -Vx) having an identical potential (absolute value) to but a polarity opposite to the source voltage Vs (= Vx) applied in the first field period 1F is applied to the source electrode 37 concerned.

At this time, the TFT 24 is in an "ON" state, whereby the negative-polarity source voltage -Vx is supplied to a pixel electrode 25, thus charging a liquid crystal capacitor (Clc) 41 and a storage capacitor (Cs) 42. As a result, the potential of the pixel electrode 25 becomes a level equal to that of the negative-polarity source (data signal) voltage -Vx.

Then, in a subsequent non-selection period $T_{off}$, for the gate line on the pixel concerned, the TFT 24 is in an "OFF" (high-resistance) state. At this time (in $T_{off}$ of 2F), in the liquid crystal cell, the liquid crystal capacitor (Clc) 41 and the holding capacitor (Cs) 42 retain the electric charges therein, respectively, charged in the selection period $T_{on}$ to keep the (negative-polarity) voltage -Vx. As a result, the liquid crystal layer 59 of the pixel concerned is supplied with the voltage -Vx through the second field period 2F to provide thereat a desired optical state (transmitted light quantity) depending on the voltage -Vx.

In the case where the response time of the liquid crystal is larger than the gate "ON" period, a switching of the liquid crystal is effected in the non-selection period Toff (the gate "OFF" period) after the completion of the charging of the liquid crystal capacitor (Clc) 42 and the storage capacitor (Cs) 42. In this case, similarly as in the first period IF, the electrical charges stored in the capacitors are reduced due to inversion of spontaneous polarization 60 to provide (negative-polarity) voltage -Vx' smaller than the voltage -Vx by a voltage Vd as a pixel voltage Vpix applied to the liquid crystal layer 59 as shown at (c) of Figure 7.

Figure 7 shows at (d) an example of an actual optical response at the pixel concerned.

As shown at (c) of Figure 7, an applied voltage through two field periods 1F and 2F comprises the positive-polarity voltage Vx' in the first field period IF and the negative-polarity voltage -Vx' (having the same amplitude (absolute value) as Vx') in the second field period 2F. In the first field period 1F, as shown at (d) of Figure 7, a higher luminance or transmitted light quantity Tx is obtained in the first field period IF but in the second field period 2F, a lower luminance or transmitted liquid quantity Ty which is closer to zero but a non-zero value because the relationship of $\beta 1 > \beta 2$ is satisfied.

As described above, in the active matrix driving method, it becomes possible to effect a good gradational display based on a high-speed responsiveness of the chiral smectic liquid crystal. In addition, a gradational display of a prescribed level at each pixel is continuously performed by dividing one frame period into a first field pixel IF providing a higher transmitted light quantity and a second field period 2F providing a lower transmitted light quantity, thus resulting in a timewise aperture rate of at most 50 % to improve a human-sensible high-speed responsiveness with respect to

motion picture display. For this purpose, the maximum tilting angles β1 and β2 may preferably satisfy the relationship of β1 ≧ 5 x β2. Further, in the second field period 2F providing the lower transmitted light quantity, the resultant transmitted light quantity is not completely zero due to a slight switching (inversion) performance of liquid crystal molecules, thus ensuring a certain human-sensible luminance through the entire frame period.

In the above embodiment, the polarity of the voltage (Vx or -Vx) is changed alternately for every field period (IF or 2F) (i.e., polarity-inversion for each field period), whereby the voltage actually applied to the liquid crystal layer 59 is continuously changed in an alternating manner to suppress a deterioration of the liquid crystal material used even in a continuous display operation for a long period.

As described above, in the above active matrix driving method, in each frame period consisting of two field periods 1F and 2F, a resultant transmitted light quantity corresponds to an average of Tx and Ty. Accordingly, in order to obtain a further higher transmitted light quantity in each frame period, it is preferred to apply a source (data signal) voltage Vs providing a transmitted light quantity higher than Tx in the first field period IF by a prescribed level.

The liquid crystal device of embodiments of the invention may be applicable to a full-color liquid crystal display apparatus using the liquid crystal device in combination with a plurality of color light sources of at least red (R), green (G) and blue (B) without using a color filter, as desired, thus effecting color mixing in a multiplexing manner.

In another preferred embodiment, the liquid crystal device may preferably be designed to provide a pretilt angle of at least 10 degrees with respect to at least one of a pair of substrates in combination with the anti-parallel rubbing cell structure as described above, thus effectively suppressing an occurrence of the stripe textures and loop-shaped region. As a result, it becomes possible to realize prevention of an irregularity in V-T characteristic and improvement in contrast over the entire display panel area.

In this embodiment, it is also possible to prevent an occurrence of a minute domain which is considerably smaller then the loop-shaped region. As a result, a phenomenon such that a domain is visually confirmed as a region wherein a portion (e.g., a white (bright) portion) gradually grows or reduced depending on a change in applied voltage is not observed. In this case, in each domain, an entire region is completely changed between a white state and a black state through an intermediate (halftone) state depending on an applied voltage with no enlargement and/or reduction of the domain pattern, thus realizing a smooth and uniform gradation display performance.

Hereinbelow, the present invention will be described more specifically based on Examples. Example 1

A chiral smectic liquid crystal composition LC-1 was prepared by mixing the following compounds in the indicated proportions.

| Structural formula | wt. % |
|---|---|
| 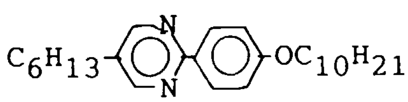 | 11.55 |
| 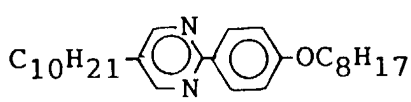 | 11.55 |
| 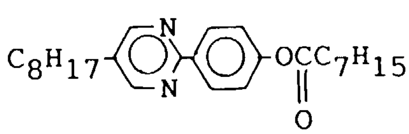 | 7.70 |
| 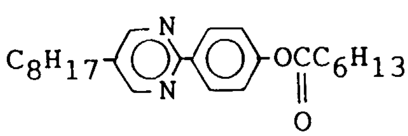 | 7.70 |
| 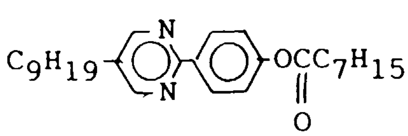 | 7.70 |

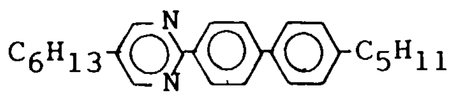 9.90

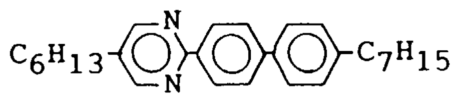 9.90

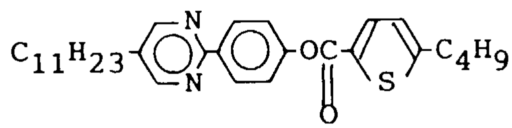 30.0

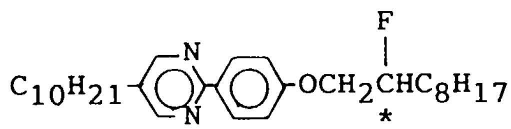 4.00

The thus-prepared liquid crystal composition LC-1 showed the following phase transition series and physical properties.

Phase transition temperature (°C)

$$\mathrm{Iso} \xrightarrow{86.3} \mathrm{Ch} \xrightarrow{61.2} \mathrm{SmC}^{*} \xrightarrow{-7.2} \mathrm{Cry}$$

(Iso: isotropic phase, Ch: cholesteric phase,
SmC*: chiral smectic C phase, Cry: crystal phase)
Spontaneous polarization (Ps): 2.9 $nC/cm^2$ (30 °C)
Tilt angle Ⓗ: 23.3 degrees (30 °C), AC voltage
= 100 Hz and ±12.5 V, cell gap = 1.4 μm)
Layer inclination angle 6: 21.6 degrees (30 °C)
Helical pitch (SmC*): at least 20 μm (30 °C)

The values of spontaneous polarization Ps, tilt angle Ⓗ and layer inclination angle δ in smectic layer referred to herein are based on values measured according to the following methods.

Measurement of spontaneous polarization Ps

The spontaneous polarization Ps was measured according to "Direct Method with Triangular Waves for Measuring Spontaneous Polarization in Ferroelectric Liquid Crystal", as described by K. Miyasato et al (Japanese J. Appl. Phys. 22, No. 10, pp. L661-(1983)).

Measurement of tilt angle Ⓗ

A liquid crystal device was sandwiched between right angle-cross nicol polarizers and rotated horizontally relative to the polarizers under application of an AC voltage of ±12.5 V to ±50 V and 1 to 100 Hz between the upper and lower substrates of the device while measuring a transmittance through the device by a photomultiplier (available from Hamamatsu Photonics K.K.) to find a first extinct position (a position providing the lowest transmittance) and a

second extinct position. A tilt angle H was measured as half of the angle between the first and second extinct positions.

Measurement of liquid crystal layer inclination angle δ

The method used was basically similar to the method used by Clark and Largerwal (Japanese Display '86, Sept. 30 - Oct. 2, 1986, p.p. 456 - 458) or the method of Ohuchi et al (J.J.A.P., 27 (5) (1988), p.p. 725 - 728). The measurement was performed by using a rotary cathode-type X-ray diffraction apparatus (available from MAC Science), and 80 μm-thick microsheets (available from Corning Glass Works) were used as the substrates so as to minimize the X-ray absorption with the glass substrates of the liquid crystal cells.

A blank cell A was prepared in the following manner.

A pair of 1.1 mm-thick glass substrates each provided with a 700 Å-thick transparent electrode of ITO film was provided.

On each of the transparent electrodes (of the pair of glass substrates), a polyimide precursor ("JALS2022", mfd. by Japan Synthetic Rubber Co. Ltd.) was applied by spin coating and pre-dried at 80 °C for 5 min., followed by hot-baking at 200 °C for 1 hour to obtain a 500 Å-thick polyimide film.

Each of the thus-obtained polyimide film was subjected to rubbing treatment (as a uniaxial aligning treatment) with a nylon cloth under the following conditions to provide an alignment control film.

Rubbing roller: a 10 cm-dia. roller about which a nylon cloth ("NF-77", mfd. by Teijin K.K.) was wound.
Pressing depth: 0.3 mm
Substrate feed rate: 10 cm/sec
Rotation speed: 1000 rpm
Substrate feed: 4 times

Then, on one of the substrates, silica beads (average particle size = 1.4 μm) were dispersed and the pair of substrates were applied to each other so that the rubbing treating axes were in parallel with each other but oppositely directed (anti-parallel relationship), thus preparing a blank cell A (single-pixel test cell) with a uniform cell gap.

The liquid crystal composition LC-1 was injected into the above-prepared blank cell A in its cholesteric phase state and gradually cooled to a temperature providing chiral smectic C phase to prepare a liquid crystal device (single-pixel test cell) A.

In the above cooling step from Iso to SmC*, the device A was subjected to a voltage application treatment such that a DC (offset) voltage of -2 volts was applied in a temperature range of Tc ±2 °C (Tc: Ch-SmC* phase transition temperature) while cooling each device at a rate of 1 °C/min.

Separately, another blank cell (single-pixel cell) for pretilt angle measurement was prepared in the same manner as in the above blank cell A except for using silica beads having an average particle size of 9 μm in place of those (average particle size = 1.5 μm). Into the thus-prepared blank cell, the liquid crystal composition LC-1 was injected, followed by heating up to 62 °C (Ch phase temperature) and measurement of pretilt angle a according to the above-described crystal rotation method.

As a result, the pretilt angle α was 12.0 degrees.

The above-prepared liquid crystal device A was evaluated in the following manner in terms of alignment state and optical response characteristics for rectangular wave and an eye observation of the rectangular wave application state, respectively.

<Alignment state>

The alignment state of the liquid crystal composition LC-1 of the liquid crystal device A was observed through a polarizing microscope at 30 °C (room temperature).

As a result, under no voltage application, a very good uniform alignment state free from stripe textures over the entire cell.

<Optical response to rectangular wave>

The liquid crystal device A was set in a polarizing microscope equipped with a photomultiplier under cross nicol relationship so that a polarizing axis was disposed to provide the darkest state under no voltage application.

When the liquid crystal device A was supplied with a rectangular wave (±5 volts, 60 Hz), a resultant transmitted light quantity (transmittance) was gradually increased with the magnitude (absolute value) of the applied voltage and with no threshold value under application of the positive-polarity voltage. The switching behavior was a domainless switching accompanied with little occurrence of minute regions. On the other hand, under application of the negative-polarity voltage, a resultant transmitted light quantity was changed with the applied voltage level but a maximum value of the transmittance was ca. 1/10 of a maximum transmittance in the case of the positive-polarity voltage application. Accordingly, it was confirmed that an average value of the resultant transmittance under application of the positive and negative voltages did not depend on that in their previous states, thus attaining a good halftone image display.
Further, the liquid crystal device A was subjected to measurement of a contrast in a temperature range of 10 - 50 °C under application of a rectangular wave (±5 V, 60 Hz).
As a result, the liquid crystal device A exhibited a minimum contrast value of 200 at 10 °C.
Further, under observation through a microscope, the liquid crystal device A did not show an irregularity in V-T (voltage-transmittance) characteristic as to a halftone display state, thus providing a good switching characteristic.

<Eye observation of optical response to rectangular wave>

When the optical response to rectangular wave of the liquid crystal device A was subjected to eye observation without using the microscope, a uniform inversion behavior completely free from a switching irregularity was confirmed.

<u>Example 2</u>

A liquid crystal device B was prepared and evaluated in the same manner as in Example 1 except that the thickness of the polyimide film (500 Å) was changed to 150 Å to provide a pretilt angle $\alpha$ of 7.0 degrees.

<Alignment state>

The alignment state of the liquid crystal composition LC-1 of the liquid crystal device B was observed through a polarizing microscope at 30 °C (room temperature).
As a result, it was confirmed that stripe textures were formed over the entire display area to provide an angle of ca. 3 degrees between an average longitudinal direction and the rubbing direction.
Further, the stripe textures provided different positions of their darkest axes (i.e., a distribution of darkest axis position) to provide a maximum angle therebetween of ca. 4 degrees.
In the liquid crystal device B, a loop-shaped region was not observed and all the layer normal directions (of smectic molecular layers) were aligned in one direction over the entire display area.

<Optical response to rectangular wave>

When the liquid crystal device B was subjected to observation of inversion behavior through a polarizing microscope under application of a positive-polarity voltage, a plurality of minute regions including a portion inverted into a white display state were caused to occur. When the appl-ied voltage was gradually increased, it was confirmed that an area of the inverted white portion was gradually enlarged. According to eye observation at that time, a transmittance of ca. 50 % was confirmed over the entire visible region under application of a voltage of ca. 2 - 3 volts.
The liquid crystal device B was set in a polarizing microscope equipped with a photomultiplier under cross nicol relationship so that a polarizing axis was disposed to provide the darkest state under no voltage application.
When the liquid crystal device B was supplied with a rectangular wave (±5 volts, 60 Hz), a resultant transmitted light quantity (transmittance) was gradually increased with the magnitude (absolute value) of the applied voltage and with no threshold value under application of the positive-polarity voltage. On the other hand, under application of the negative-polarity voltage, a resultant transmitted light quantity was changed with the applied voltage level but a maximum value of the transmittance was ca. 1/10 of a maximum transmittance in the case of the positive-polarity voltage application. Accordingly, it was confirmed that an average value of the resultant transmittance under application of the positive and negative voltages did not depend on that in their previous states, thus attaining a good halftone image display.
Further, the liquid crystal device B was subjected to measurement of a contrast in a temperature range of 10 - 50 °C under application of a rectangular wave (±5 V, 60 Hz).
As a result, the liquid crystal device B exhibited a minimum contrast value of 100 at 10 °C.

<Eye observation of optical response to rectangular wave>

When the optical response to rectangular wave of the liquid crystal device B was subjected to eye observation without using the microscope, a uniform inversion behavior completely free from a switching irregularity was confirmed.
Further, the liquid crystal device B showed a good viewing angle characteristic free from gradation inversion.

Example 3

A liquid crystal device C was prepared and evaluated in the same manner as in Example 1 except that the thickness of the polyimide film (500 Å) was changed to 150 Å to provide a pretilt angle a of 7.0 degrees and the DC (offset) voltage (-2 volts) was changed to -5 volts.

<Alignment state>

The alignment state of the liquid crystal composition LC-1 of the liquid crystal device C was observed through a polarizing microscope at 30 °C (room temperature).
As a result, it was confirmed that stripe textures were formed in an areal proportion of ca. 50 % per the entire display area to provide an angle of ca. 3 degrees between an average longitudinal direction and the rubbing direction.
Further, the stripe textures provided different positions of their darkest axes (i.e., a distribution of darkest axis position) to provide a maximum angle therebetween of ca. 4 degrees.
In the liquid crystal device C, all the layer normal directions (of smectic molecular layers) were aligned in one direction over the entire display area.

<Optical response to rectangular wave>

When the stripe texture portion of the liquid crystal device C was subjected to observation of inversion behavior through a polarizing microscope under application of a positive-polarity voltage similarly as in Example 2, a plurality of minute regions including a portion inverted into a white display state were caused to occur. When the applied voltage was gradually increased, it was confirmed that an area of the inverted white portion was gradually enlarged.
Further, a resultant transmitted light quantity (transmittance) at the stripe texture portion was gradually increased with the magnitude (absolute value) of the applied voltage and with no threshold value under application of the positive-polarity voltage and was not affected by a previous display state, thus providing a stable halftone display state. On the other hand, under application of the negative-polarity voltage, a resultant transmitted light quantity was changed with the applied voltage level but a maximum value of the transmittance was ca. 1/10 of a maximum transmittance in the case of the positive-polarity voltage application. Accordingly, it was confirmed that an average value of the resultant transmittance under application of the positive and negative voltages did not depend on that in their previous states, thus attaining a good halftone image display.
On the other hand, a portion other than the stripe texture portion of the liquid crystal device C provided a uniform alignment state and was confirmed that at the portion a domainless switching accompanied with no occurrence of the above-mentioned minute regions was effected.
Further, under application of the negative-polarity voltage, a resultant transmittance was changed with the applied voltage level but a maximum value of the transmittance was ca. 1/10 of a maximum transmittance in the case of the positive-polarity voltage application. Accordingly, it was confirmed that an average value of the resultant transmittance under application of the positive and negative voltages did not depend on that in their previous states, thus attaining a good halftone image display. On the other hand, under application of the negative-polarity voltage, a resultant transmitted light quantity was changed with the applied voltage level but a maximum value of the transmittance was ca. 1/10 of a maximum transmittance in the case of the positive-polarity voltage application. Accordingly, it was confirmed that an average value of the resultant transmittance under application of the positive and negative voltages did not depend on that in their previous states, thus attaining a good halftone image display.
Further, the liquid crystal device C was subjected to measurement of a contrast in a temperature range of 10 - 50 °C under application of a rectangular wave (±5 V, 60 Hz).
As a result, the liquid crystal device C exhibited a minimum contrast value of 120 at 10 °C.

Example 4

A liquid crystal device D was prepared and evaluated in the same manner as in Example 1 except that the DC (offset) voltage (-2 volts) was changed to -5 volts degrees.

<Alignment state>

The alignment state of the liquid crystal composition LC-1 of the liquid crystal device D was observed through a polarizing microscope at 30 °C (room temperature).
As a result, under no voltage application, a very good uniform alignment state free from stripe textures over the entire cell.

<Optical response to rectangular wave>

The liquid crystal device D was set in a polarizing microscope equipped with a photomultiplier under cross nicol relationship so that a polarizing axis was disposed to provide the darkest state under no voltage application.
When the liquid crystal device D was supplied with a rectangular wave (±5 volts, 60 Hz), a resultant transmitted light quantity (transmittance) was gradually increased with the magnitude (absolute value) of the applied voltage and with no threshold value under application of the positive-polarity voltage. The switching behavior was a domainless switching accompanied with substantially no occurrence of minute regions. In this regard, a degree of occurrence of minute regions was further fewer than that in Example 1. On the other hand, under application of the negative-polarity voltage, a resultant transmitted light quantity was changed with the applied voltage level but a maximum value of the transmittance was ca. 1/10 of a maximum transmittance in the case of the positive-polarity voltage application. Accordingly, it was confirmed that an average value of the resultant transmittance under application of the positive and negative voltages did not depend on that in their previous states, thus attaining a good halftone image display.
Further, the liquid crystal device D was subjected to measurement of a contrast in a temperature range of 10 - 50 °C under application of a rectangular wave (±5 V, 60 Hz).
As a result, the liquid crystal device D exhibited a minimum contrast value of 200 at 10 °C.
Further, under observation through a microscope, the liquid crystal device D did not show an irregularity in V-T (voltage-transmittance) characteristic as to a halftone display state, thus providing a good switching characteristic.

Comparative Example 1

A liquid crystal device E was prepared and evaluated in the same manner as in Example 1 except that a 50 Å-thick polyimide film was formed by using a polyimide precursor ("SE7992", mfd. by Nissan Kagaku K.K.) to provide a pretilt angle $\alpha$ of 2.0 degrees.

<Alignment state>

The alignment state of the liquid crystal composition LC-1 of the liquid crystal device E was observed through a polarizing microscope at 30 °C (room temperature).
As a result, it was confirmed that stripe textures partially including a loop-shaped region were formed over the entire display area to provide an angle of ca. 3 degrees between an average longitudinal direction and the rubbing direction.
Further, the stripe textures provided different positions of their darkest axes (i.e., a distribution of darkest axis position) to provide a maximum angle therebetween of ca. 4 degrees.
In the liquid crystal device E, all the layer normal directions (of smectic molecular layers) were aligned in one direction over the entire display area.

<Optical response to rectangular wave>

When the liquid crystal device E was subjected to observation of inversion behavior through a polarizing microscope under application of a positive-polarity voltage, a plurality of minute regions including a portion inverted into a white display state were caused to occur. When the applied voltage was gradually increased, it was confirmed that an area of the inverted white portion was gradually enlarged. According to eye observation at that time, a transmittance of ca. 50 % was confirmed at the stripe texture portion under application of a voltage of ca. 2 - 3 volts. At the loop-shaped region, a transmittance of ca. 50 % was obtained under application of a voltage of ca. 4 volts, thus requiring a higher applied voltage for molecular inversion compared with peripheral stripe texture portion.
The liquid crystal device E was set in a polarizing microscope equipped with a photomultiplier under cross nicol relationship so that a polarizing axis was disposed to provide the darkest state under no voltage application.
When the liquid crystal device E was supplied with a rectangular wave (±5 volts, 60 Hz), a resultant transmitted light quantity (transmittance) was gradually increased with the magnitude (absolute value) of the applied voltage and with no threshold value under application of the positive-polarity voltage. The increased transmittance was accompanied with an increase in area of the inverted white portion in the minute regions. On the other hand, under application of the negative-polarity voltage, a resultant transmitted light quantity was changed with the applied voltage level but a maximum value of the transmittance was ca. 1/10 of a maximum transmittance in the case of the positive-polarity voltage application. Accordingly, it was confirmed that an average value of the resultant transmittance under application of the positive and negative voltages did not depend on that in their previous states, thus attaining a good halftone image display.
Further, the liquid crystal device E was subjected to measurement of a contrast in a temperature range of 10

- 50 °C under application of a rectangular wave (±5 V, 60 Hz).

As a result, the liquid crystal device E exhibited a minimum contrast value of 90 at 10 °C.

<Eye observation of optical response to rectangular wave>

When the optical response to rectangular wave of the liquid crystal device E was subjected to eye observation without using the microscope, a switching irregularity attributable to presence of the loop-shaped region was confirmed, thus causing a problem in the case o being used as a direct-view type liquid crystal device.

As described hereinabove, according to the present invention, it is possible to provide a high-speed response liquid crystal device with a high contrast and a uniform switching characteristic free from alignment defects and irregularity in V-T characteristic, thus realizing a good gradation display.

## Claims

**1.** A liquid crystal device, comprising:

a pair of substrates each having thereon an electrode, and
a liquid crystal disposed between the substrates so as to be supplied with a voltage applied between the electrodes, wherein
the pair of substrates are provided with uniaxial aligning axes which are parallel but opposite to each other,
the liquid crystal is a chiral smectic liquid crystal having a phase transition series of isotropic phase, cholesteric phase and chiral smectic C phase or a phase transition series of isotropic phase and chiral smectic C phase, respectively, on temperature decrease, and
the liquid crystal is placed in a monostable state under no voltage application and is placed in an alignment state exhibiting a pretilt angle of at least 4 degrees at a boundary thereof with at least one of the substrates.

**2.** A device according to Claim 1, wherein the liquid crystal has an alignment characteristic such that the liquid crystal is aligned to provide an average molecular axis to be placed in a monostable alignment state under no voltage application, is tilted from the monostable alignment state in one direction when supplied with a voltage of a first polarity at a tilting angle which varies depending on magnitude of the supplied voltage, and is tilted from the monostable alignment state in the other direction when supplied with a voltage of a second polarity opposite to the first polarity at a tilting angle, said tilting angles providing maximum tilting angles $\beta 1$ and $\beta 2$ formed under application of the voltages of the first and second polarities, respectively, satisfying $\beta 1 > \beta 2$.

**3.** A device according to Claim 1, wherein the maximum tilting angles $\beta 1$ and $\beta 2$ satisfy $\beta 1 \geqq 5 \times \beta 2$.

**4.** A device according to claims 1 or 2, wherein the device includes a plurality of pixels each provided with an active element and is driven in an acting matrix manner through the active element to effect analog gradation display.

**5.** A device according to any of claims 1 to 4, wherein the liquid crystal has a helical pitch in its bulk state larger than a value two times a cell thickness.

**6.** A device according to any of claims 1 to 5, which is of a light-transmission type.

**7.** A device according to any of claims 1 to 6, wherein light is passed from one of the pair of substrates to the other substrate.

**8.** A device according to any of claims 1 to 7, which further comprises a color filter provided to one of the pair of substrates disposed opposite to the other substrate through which incident light passes.

**9.** A device according to any one of Claims 1 - 5, wherein the pretilt angle is at least 4 degrees and below 10 degrees.

**10.** A device according to any one of Claims 1 - 8, wherein the pretilt angle is at least 10 degrees.

**11.** A device according to any of claims 1 to 8, wherein the pretilt angle is at least 4 degrees and below 50 degrees.

**12.** A device according to Claim 10, wherein the pretilt angle is at least 10 degrees and below 50 degrees.

**13.** A liquid crystal display apparatus, comprising:

a liquid crystal device according to any of claims 1 to 8, and
a plurality of light sources of three colors for illuminating the liquid crystal device.

**14.** An apparatus according to Claim 13, wherein the pretilt angle is at least 10 degrees.

**15.** An apparatus according to Claim 13, wherein the pretilt angle is at least 4 degrees and below 10 degrees and the apparatus is of a direct-view type.

**16.** An apparatus according to Claim 13, wherein the pretilt angle is at least 10 degrees and below 50 degrees and the apparatus further comprises an enlarged optical system.

**17.** An apparatus according to Claim 13, which further comprises an active matrix drive means for driving the liquid crystal device in an active matrix manner.

**18.** An apparatus according to Claim 17, wherein the pretilt angle is at least 10 degrees.

**19.** A driving method for a liquid crystal device according to any of claims 1 to 8, comprising the steps of:

dividing a frame period into a plurality of field periods including a first field period and a second field period, in the first field period, the method comprising:
a step of applying a voltage to a scanning signal line to turn a TFT (thin film transistor) on in a selection period,
a step of applying a source voltage of a polarity to a pixel electrode via the TFT in synchronism with the voltage application to the scanning signal line, and
a step of causing first switching of liquid crystal molecules in a non-selection period wherein the voltage is not applied to the scanning signal line.

**20.** A method according to Claim 19, wherein in the second field period, the method further comprising:

a step of applying a voltage to a scanning signal line to turn a TFT on in a selection period,
a step of applying a source voltage of a polarity to a pixel electrode via the TFT in synchronism with the voltage application to the scanning signal line in the second field period, and
a step of causing second switching of liquid crystal molecules in a non-selection period wherein the voltage is not applied to the scanning signal line in the second field period.

**21.** A method according to Claim 19, which the first switching and the second switching are successively effected in the frame period.

**22.** A method according to any one of Claims 19 - 21, wherein the pretilt angle is at least 10 degrees.

**23.** A device according to Claim 1, wherein the chiral smectic liquid crystal is placed in a stable position substantially aligned with the uniaxial aligning axes.

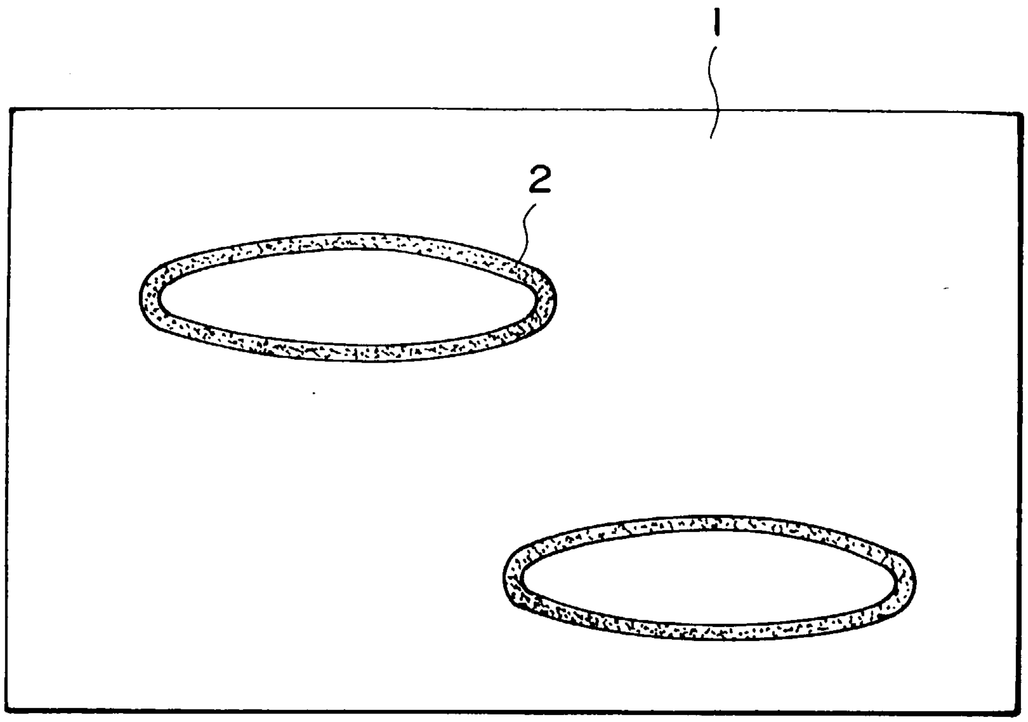


FIG. 1

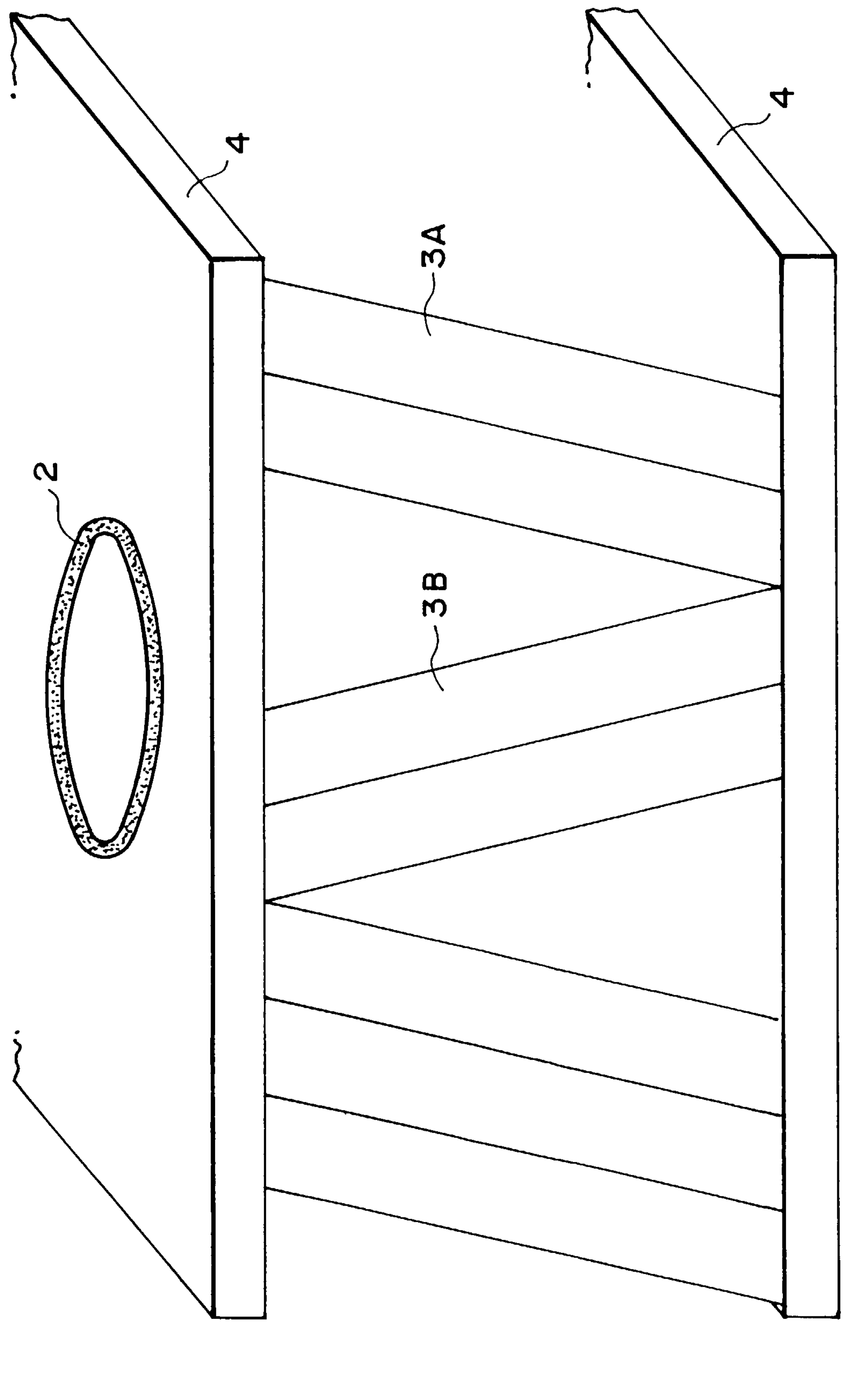


FIG. 2

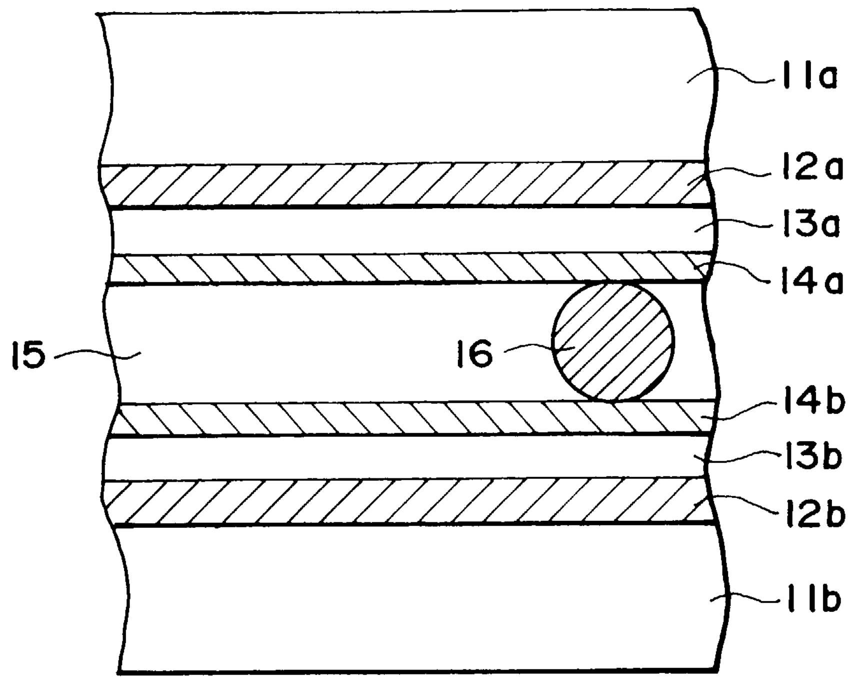


FIG. 3

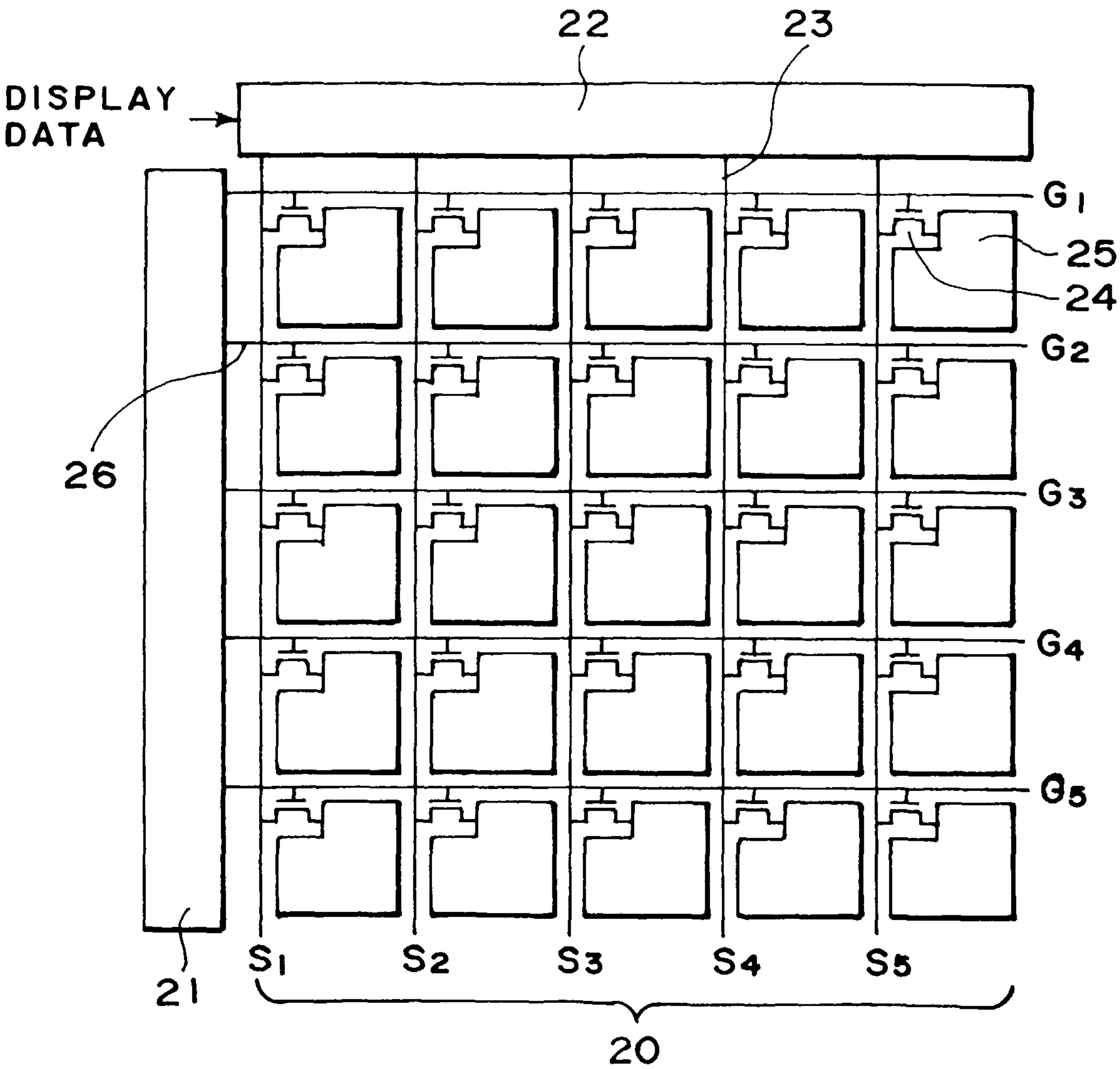


F I G. 4

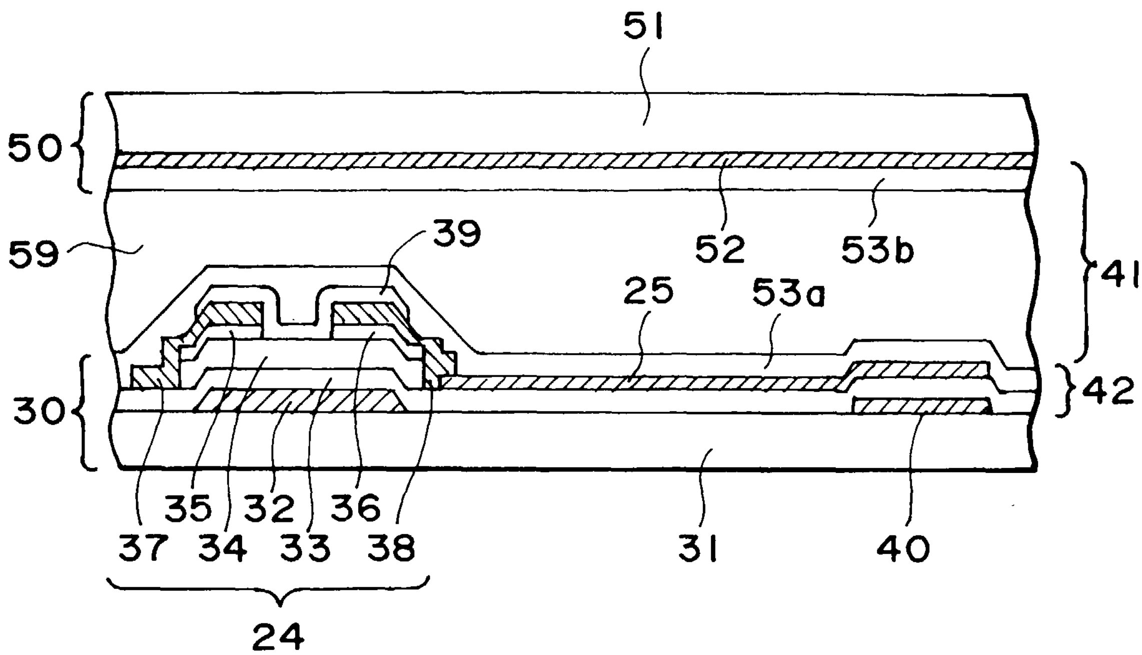
51
50
59
39
52
53b
41
25
53a
30
42
35
32
36
37
34
33
38
31
40
24

FIG. 5

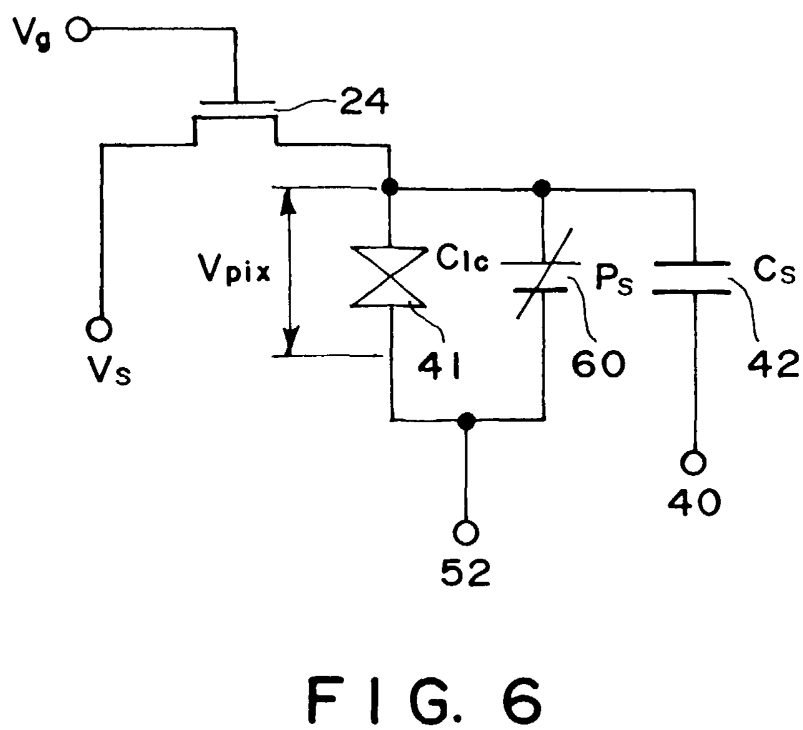
Vg
24
Vpix
Clc
Ps
Cs
Vs
41
60
42
40
52

FIG. 6

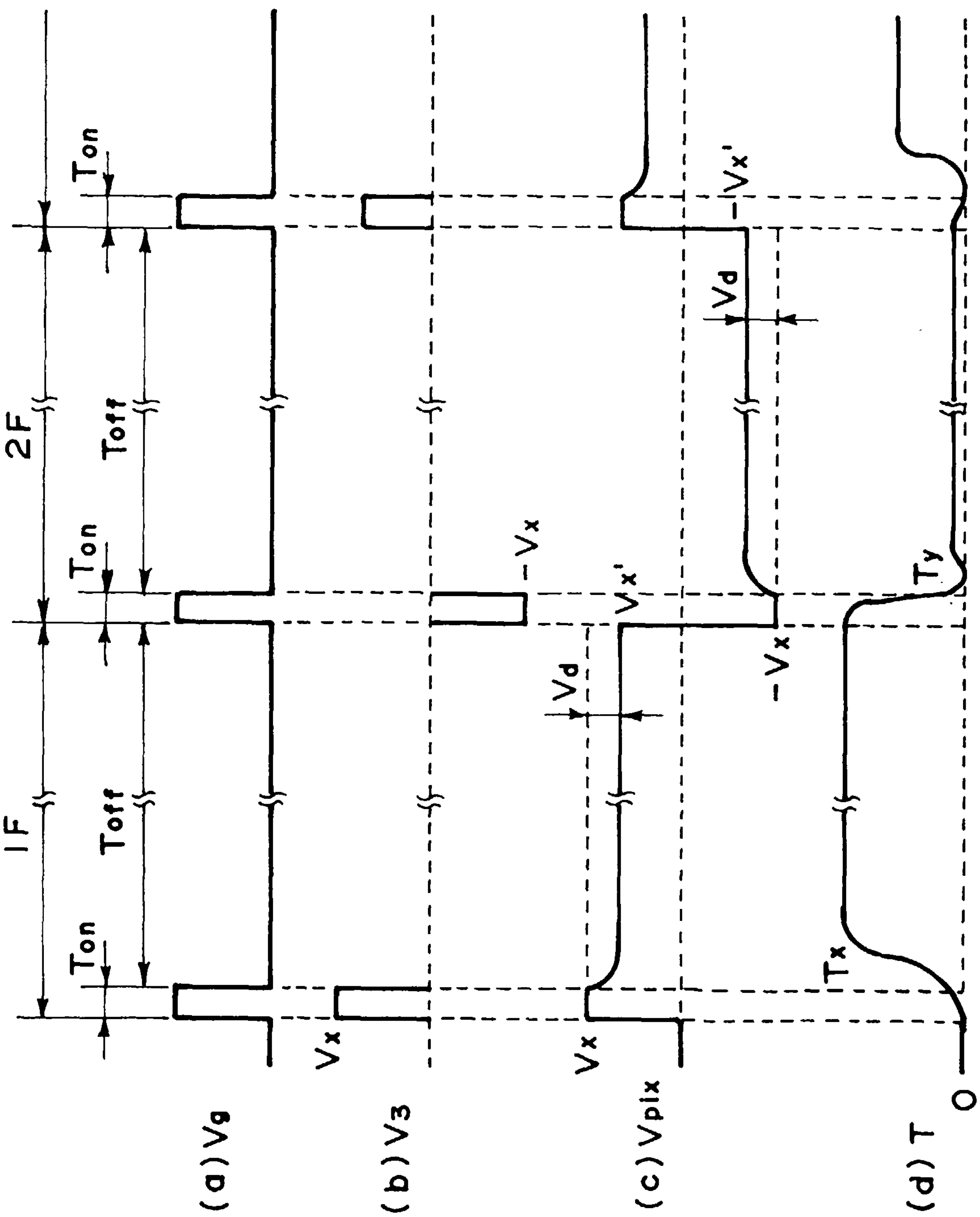


FIG. 7